# EUROPÄISCHE PATENTSCHRIFT

(11) **EP 3 349 947 B1**
(45) Veröffentlichungstag und Bekanntmachung des Hinweises auf die Patenterteilung: **22.07.2020**
(21) Anmeldenummer: 16763242.1
(22) Anmeldetag: 07.09.2016
(51) Int. Cl.: B25F 5/00

(54) **KOMMUNIKATIONSEINRICHTUNG FÜR EINE ELEKTRISCHE WERKZEUGMASCHINE, ELEKTROWERKZEUGSYSTEM UND VERFAHREN**
COMMUNICATION UNIT FOR AN ELECTRICAL MACHINE TOOL, ELECTRICAL MACHINE TOOL SYSTEM AND METHOD
DISPOSITIF DE COMMUNICATION POUR UNE MACHINE-OUTIL ÉLECTRIQUE, SYSTÈME D'OUTIL ÉLECTRIQUE ET PROCÉDÉ

(30) Priorität: 17.09.2015 DE 102015217826
(43) Veröffentlichungstag der Anmeldung: 25.07.2018
(73) Patentinhaber: Robert Bosch GmbH, 70442 Stuttgart (DE)
(72) Erfinder: SZELL, Istvan, 70771 Leinfelden-Echterdingen (DE)
(86) Internationale Anmeldenummer: PCT/EP2016/071037
(87) Internationale Veröffentlichungsnummer: WO 2017/045980

(56) Entgegenhaltungen:
- EP-A1- 2 868 437
- EP-A2- 1 136 188
- WO-A2-2014/198679
- DE-A1-102013 211 228
- JP-A- H04 169 000
- JP-A- 2006 067 726

## Beschreibung

Die Erfindung betrifft eine Kommunikationseinrichtung für eine elektrische Werkzeugmaschine, insbesondere Handwerkzeugmaschine, die wenigstens einen Elektroaktuator und eine Steuereinheit zum Ansteuern des Elektroaktuators aufweist, mit einer der Werkzeugmaschine zugeordneten Sendeeinrichtung zum Senden von Daten und mit einer einer mobilen oder stationären Einrichtung zugeordneten Empfangseinrichtung zum Empfangen der Daten.

Weiterhin betrifft die Erfindung ein Elektrowerkzeugsystem für ein derartiges Elektrowerkzeug sowie ein Verfahren zum Betreiben einer Kommunikationseinrichtung oder eines Elektrowerkzeugs wie sie oben stehend beschrieben wurden.

### Stand der Technik

Kommunikationseinrichtungen der eingangs genannten Art sind aus dem Stand der Technik bereits bekannt. Werkzeugmaschinen, insbesondere Handwerkzeugmaschinen, werden meistens als eigenständige Geräte verstanden, die sämtliche Steuerungs- und Informationsfunktionen selbst zur Verfügung stellen, sodass der Benutzer direkt an der Werkzeugmaschine Steuereingaben vornehmen und Informationen auslesen kann. Durch die Vernetzung von Produkten untereinander mittels des sogenannten Internet der Dinge (Internet of things) werden neue Möglichkeiten zur Verfügung gestellt, durch welche eine dezentrale beziehungsweise von der Werkzeugmaschine gelöste Informationsausgabe oder Steuereingabe möglich wird. Dadurch kann beispielsweise die Werkzeugmaschine durch eine externe beziehungsweise separate Einrichtung fernbedient oder ihr Betriebsstatus überprüft werden. Zur Übertragung der Daten werden Kommunikationseinrichtungen verwendet, die unterschiedliche Datenübertragungsmöglichkeiten nutzen. So sind Kommunikationseinrichtungen bekannt, die kabellos per Infrarot oder sichtbarem Licht Daten übermitteln. Auch sind kabelgebundene Verbindungen von Kommunikationseinrichtungen bekannt. Andere Beispiele sind aus der DE102013211228A1 oder WO2014198679A2 bekannt.

Nachteilig bei den bekannten Kommunikationseinrichtungen ist es, dass zusätzlich zu einer bereits in der Werkzeugmaschine vorhandenen Elektronik außerdem eine Sendeeinrichtung integriert werden muss, die beispielsweise Betriebsdaten der Werkzeugmaschine an die separate Einrichtung kabellos übermittelt.

### Offenbarung der Erfindung

Die erfindungsgemäße Kommunikationseinrichtung mit den Merkmalen des Anspruchs 1 hat den Vorteil, dass bereits in der Werkzeugmaschine vorhandene Mittel zum Senden der Daten genutzt werden. Dadurch kann auf das Hinzufügen und konstruktive Einplanen einer zusätzlichen Sendeeinrichtung verzichtet werden. Es wird eine besonders kompakte und kostengünstige Lösung geboten, durch welche es möglich ist, Daten von der Werkzeugmaschine kabellos zu der separaten Einrichtung zu senden. Erfindungsgemäß ist hierzu vorgesehen, dass die Empfangseinrichtung wenigstens ein Mikrophon aufweist, und dass die Steuereinheit zusammen mit dem Elektroaktuator die Sendeeinheit bildet und zum Senden von Daten den Elektroaktuator zur Erzeugung von einem durch das Mikrofon zu erfassenden akustischen Signal ansteuert. Die Kommunikationseinrichtung nutzt also die akustische Übermittlung von Daten. Dazu steuert die Steuereinheit den Elektroaktuator derart an, dass dieser ein Audiosignal beziehungsweise ein oder mehrere definierte Geräusche erzeugt, die von dem Mikrofon der Empfangseinrichtung erfasst und ausgewertet werden können. Die Sendeeinheit der Kommunikationseinrichtung wird somit erfindungsgemäß durch die Steuereinheit und den Elektroaktuator zusammen gebildet. Dadurch werden in der Werkzeugmaschine bereits vorhandene Elemente zur Datenübertragung genutzt. Allein durch die Programmierung der Steuereinheit zum entsprechenden Ansteuern des Elektroaktuators wird erreicht, dass Daten der Elektrowerkzeugmaschine akustisch versendet werden.

Gemäß einer bevorzugten Weiterbildung der Erfindung ist vorgesehen, dass die Steuereinheit eine Leistungselektronik mit wenigstens einem elektrisch betätigbaren Schaltelement, insbesondere Leistungshalbleiterschalter, aufweist. Durch Ansteuern der Leistungselektronik, insbesondere des Schaltelements, ist der Elektroaktuator zum Erzeugen der Geräusche auf einfache Art und Weise ansteuerbar. Durch das Verwenden von Leistungshalbleiterschaltern sind besonders schnelle Schaltvorgänge möglich, die zu einer gezielten Geräuschentwicklung führen, sodass eine hohe Auflösung in Bezug auf den Informationsgehalt des akustischen Signals erzielt werden kann.

Besonders bevorzugt ist der Elektroaktuator als Elektromotor ausgebildet. Die Steuereinheit kann den Elektromotor beispielsweise dazu anregen, gezielt akustische Informationen zu erzeugen, welche von dem Mikrofon der Empfangseinrichtung erfasst werden können. Dabei wird insbesondere auch ein Gehäuse der Werkzeugmaschine als akustischer Verstärker und/oder Leiter genutzt. Alternativ kann auch vorgesehen sein, dass der Elektroaktuator ein elektrischer Magnetaktuator ist, der beispielsweise ein Ventil oder dergleichen betätigt. Durch eine entsprechende Ansteuerung auch dieses Elektroaktuators ist es möglich, gezielt ein akustisches Signal zu erzeugen, das von dem Mikrofon erfasst und ausgewertet werden kann.

Das erfindungsgemäße Elektrowerkzeugsystem mit den Merkmalen des Anspruchs 4 zeichnet sich durch die erfindungsgemäße Kommunikationseinrichtung aus. Dazu bilden die Steuereinheit und der Elektroaktuator des Elektrohandwerkzeugs zusammen die Sendeeinrichtung und die mobile oder stationäre Einrichtung weist die dazugehörige Empfangseinrichtung mit einem Mikrofon auf. Es ergeben sich hierdurch die bereits genannten Vorteile. Weitere Merkmale und Vorteile ergeben sich insbesondere aus dem zuvor Beschriebenen sowie aus den Ansprüchen.

Besonders bevorzugt ist vorgesehen, dass die Einrichtung als Mobilcomputer oder Mobiltelefon ausgebildet ist. Dadurch kann der Benutzer auf einfache Art und Weise, beispielsweise durch das Aufspielen eines entsprechenden Programms oder einer Applikation auf sein Mobiltelefon oder Mobilcomputer, das ohnehin vorhandene Mikrofon des Mobilcomputers oder Mobiltelefons dazu nutzen, die von dem Elektrowerkzeug erzeugten Geräusche auszuwerten, um beispielsweise Betriebsdaten des Elektrowerkzeugs zu empfangen und auszuwerten.

Das erfindungsgemäße Verfahren mit den Merkmalen des Anspruchs 6 zeichnet sich dadurch aus, dass zum Senden von Daten der Elektroaktuator zum Erzeugen eines akustischen Signals angesteuert wird, das von der Empfangseinrichtung erfasst und ausgewertet wird. Es ergeben sich hierdurch die bereits genannten Vorteile.

Nach Anspruch 1 ist weiterhin vorgesehen, dass der Elektroaktuator derart angesteuert wird, dass er aktuierungsfrei Geräusche erzeugt. Unter einer aktuierungsfreien Ansteuerung ist in diesem Zusammenhang zu verstehen, dass der Elektroaktuator durch die Ansteuerung die ihm eigentlich zugeordnete Funktion, wie beispielsweise das Betätigen des Ventils oder das Erzeugen eines Drehmoments, nicht durchführt und stattdessen lediglich ein gezieltes Geräusch beziehungsweise akustisches Signal erzeugt.

Insbesondere ist vorgesehen, dass der Elektromotor zum Erzeugen des Signals derart angesteuert wird, dass er drehmomentfrei oder rotationsfrei angesteuert wird, also kein Drehmoment und keine Rotation erzeugt. Durch den Elektromotor erfolgt somit keine Aktuierung, beispielsweise kein Antreiben eines Werkzeugs. Hierdurch wird sichergestellt, dass durch das Senden der Daten die Werkzeugmaschine sich in einem betriebssicheren Zustand befindet und insbesondere keine ungewollten Aktuierungen erfolgen.

Weiterhin ist bevorzugt vorgesehen, dass der Elektroaktuator als Elektromotor pulsweitenmoduliert angesteuert wird. Hierdurch ist eine einfache und präzise Ansteuerung des Elektromotors insbesondere zur Erzeugung des zu übermittelnden akustischen Signals beziehungsweise Daten gewährleistet.

Weitere Vorteile und bevorzugte Merkmale ergeben sich insbesondere aus dem zuvor Beschriebenen sowie aus den Ansprüchen.

Im Folgenden soll die Erfindung anhand der Zeichnung näher erläutert werden. Dazu zeigen
- Figur 1: ein Elektrowerkzeugsystem in einer vereinfachten Darstellung,
- Figur 2: eine Kommunikationseinrichtung des Elektrowerkzeugsystems in einer vereinfachten Darstellung und
- Figur 3: ein Beispiel eines durch die Kommunikationseinrichtung übermittelten Signals.

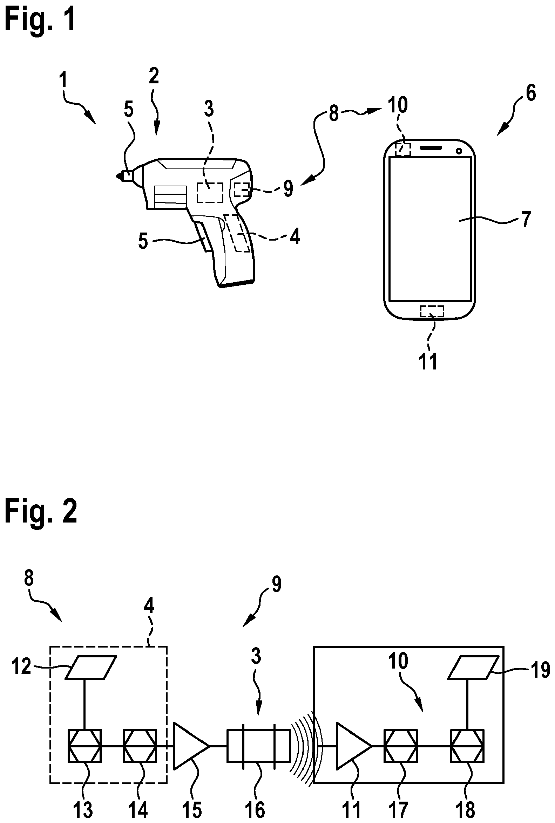

Figur 1 zeigt in einer vereinfachten Darstellung ein Elektrowerkzeugsystem 1 mit einer Elektrowerkzeugmaschine 2, die als Handschraubmaschine ausgebildet ist. Dazu weist die Elektrowerkzeugmaschine 2 einen Elektroaktuator 3 in Form eines Elektromotors auf, sowie eine Steuereinheit 4, die in Abhängigkeit einer Betätigung eines Bedienelements 5 den Elektroaktuator 3 dazu ansteuert, eine Werkzeugaufnahme 5 in eine von zwei Drehrichtungen anzutreiben. Das Elektrowerkzeugsystem 1 weist weiterhin eine von der Elektrowerkzeugmaschine 2 separate Einrichtung 6 auf, die als Mobiltelefon ausgebildet ist und einen berührungsempfindlichen Bildschirm 7 zur Darstellung von Informationen und zur Eingabe von Steuerbefehlen aufweist.

Das Elektrowerkzeugsystem 1 weist weiterhin eine Kommunikationseinrichtung 8 auf, die eine der Elektrowerkzeugmaschine 2 zugeordnete Sendeeinrichtung 9 sowie eine der Einrichtung 6 zugeordnete Empfangseinrichtung 10 aufweist. Die Empfangseinrichtung 10 weist ein Mikrofon 11 auf, wobei es sich in dem vorliegenden Fall um das Mikrofon 11 des Mobiltelefons 6 handelt, das im Normalbetrieb zur Aufnahme von Sprache verwendet wird.

Die Sendeeinrichtung 9 wird durch die Steuereinheit 4 und den Elektromotor gebildet. Die Steuereinheit 4 ist dazu ausgebildet, den Elektroaktuator 3 zum Senden von Daten derart anzusteuern, dass dieser ein oder mehrere Geräusche zur Bildung eines akustischen Signals erzeugt, ohne dass dabei ein Antrieb der Werkzeugaufnahme 5 erfolgt. Die Steuereinheit 4 steuert dazu beispielsweise eine dem Elektromotor vorgeschaltete Leistungselektronik 15 derart pulsweitenmoduliert an, die den Elektromotor 3 in eine Vibrationsbewegung versetzt. Alternativ steuert die Steuereinheit 4 den Elektromotor derart an, dass er gänzlich ohne eigene Bewegung allein durch die elektrische Ansteuerung ein akustisches Signal erzeugt, das von dem Mikrofon 11 der Empfangseinrichtung 10 erfassbar ist. Die Empfangseinrichtung 10 erfasst bei ausreichender Lautstärke des erzeugten akustischen Signals das akustische Signal und wertet dieses aus, um die durch die Sendeeinrichtung 9 gesendeten Daten auszulesen.

Figur 2 zeigt dazu in einer vereinfachten Teilansicht die Kommunikationseinrichtung 8. Die Steuereinheit 4 weist Mittel oder eine Einrichtung 12 zum Erfassen aktueller Betriebsdaten der Elektrowerkzeugmaschine 2 auf. Durch die Einrichtung 12 werden beispielsweise eine oder mehrere Temperaturwerte unterschiedlicher Komponenten der Elektrowerkzeugmaschine 2 erfasst. Auch ist es denkbar, durch die Einrichtung 12 den Ladezustand einer wiederaufladbaren Batterie der Elektrowerkzeugmaschine 2 zu erfassen. Auch ist es denkbar, dass ein aktueller Strom, eine Spannung oder auch eine Beschleunigung des Elektromotors erfasst werden. Darüber hinaus kann die Einrichtung 12 auch aus einem Speicher der Steuereinheit 4 beispielsweise eine Seriennummer, ein Maschinentyp eine Betriebslaufzeit, Fehlermeldungen oder dergleichen auslesen.

Die von der Einrichtung 12 erfassten Daten werden insbesondere wahlweise beziehungsweise je nach Bedarf durch eine Kodiereinrichtung 13 in ein Format gebracht, das sich für die Datenübertragung mittel der Sendeeinrichtung 9 eignet. Wenn nötig, kann die Kodierung auch mit einer Fehlerkorrektur erweitert werden.

Eine Einrichtung 14 bereitet die formatierten Daten, die insbesondere als Datenpakt vorliegen, für die akustische Übertragung vor. Insbesondere ist vorgesehen, dass hierzu das Datenpaket eine Frequenzumtastung (frequency shift keying-FSK) unterzogen wird. Hierdurch werden in vorteilhafter Weise die zu übertragenden digitalen Daten in eine für die akustische Datenübertragung geeignete Form gebracht. Insbesondere wird dabei eine Trägerfrequenz einer periodischen Sinusschwingung zwischen einem Satz unterschiedlicher Frequenzen verändert, welche die einzelnen Sendesymbole beziehungsweise Informationen darstellen. Es können jedoch auch andere Modulationsverfahren verwendet werden.

Die Steuereinheit 4 steuert die Leistungselektronik 15 des Aktuators 3 beziehungsweise Elektromotors 16 an. Dabei erfolgt durch die Leistungselektronik 15 eine pulsweitenmodulierte Ansteuerung des Elektromotors 16. Der Tastgrad (duty cycle) der Pulsweitenmodulation ist dabei derart gewählt, dass der Elektromotor 16 einerseits nicht zu rotieren beginnt, und andererseits ein akustisches Signal wie zuvor beschrieben erzeugt. Insbesondere wird der Elektromotor 16 zu einer Bewegung angeregt, die das akustische Signal wie gewünscht mechanisch generiert. Dazu kann der Elektromotor 16 beispielsweise derart angesteuert werden, dass er vibriert statt rotiert. Diese mechanische Bewegung erzeugt Schallwellen, die direkt oder indirekt ausgestrahlt werden. Gegebenenfalls werden die Schallwellen durch ein Gehäuse der Elektrowerkzeugmaschine 2 verstärkt. Die Schallwellen sind in Figur 2 vereinfacht als gekrümmte Linien dargestellt.

Das Mikrofon 11 der Empfangseinrichtung 10 erfasst die Schallwellen, die direkt oder indirekt, beispielsweise über ein Zwischenmedium, zu dem Mikrofon 11 gelangen. Eine Demodulationseinrichtung 17 wandelt das akustische Signal wieder in digitale Daten/Werte um, die von einer Dekodiereinrichtung 18 übersetzt beziehungsweise entschlüsselt und einer Einrichtung 19 in lesbarer Form zur Verfügung gestellt werden. Die Einrichtung 19 kann beispielsweise eine Steuereinheit des Mobiltelefons 6 sein, welche die bekanntgewordenen Daten durch den Bildschirm 7 dem Benutzer anzeigt.

Durch die vorgestellte Kommunikationseinrichtung 8 können somit Informationen von der Elektrowerkzeugmaschine 2 kabellos an die Einrichtung 6 durch ein akustisches Signal übertragen und dort angezeigt werden. Dabei wird auf das Vorsehen einer Lautsprechereinrichtung zum Erzeugen des akustischen Signals verzichtet. Vielmehr werden in der Elektrowerkzeugmaschine 2 bereits vorhandene Komponenten dazu verwendet, das akustische Signal zu erzeugen. Hierdurch wird eine einfache und kompakte Kommunikationseinrichtung 8 zur Verfügung gestellt, die ohne weiteres auch in eine bestehende Elektrowerkzeugmaschine 2 durch eine entsprechende Programmierung der Steuereinheit 4 integriert werden kann. Zum Empfangen der Daten kann jedes Endgerät verwendet werden, das ein Mikrofon zur Erfassung des akustischen Signals aufweist. So ist beispielsweise möglich, dass der Benutzer auf sein Mobiltelefon eine entsprechende Applikation lädt oder installiert, um Informationen seiner Elektrowerkzeugmaschine 2 bei Bedarf auslesen zu können. Dies ist auch für den Benutzer komfortabel und kostengünstig.

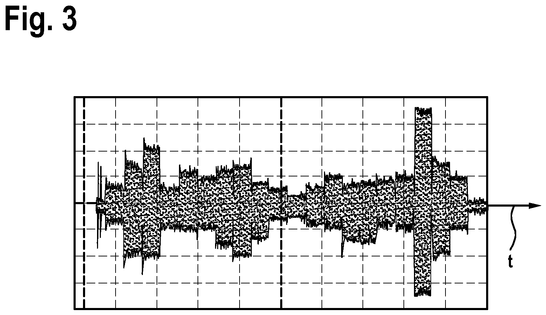

Figur 3 zeigt beispielhaft ein übertragendes Audiosignal. Vorteilhafterweise arbeitet die Kommunikationseinrichtung 8 mit einem 32-Buchstabenalphabet. Jeder Buchstabe wird durch eine andere Frequenz des Audiosignals repräsentiert. Bevorzugt umfasst ein Audiosignal beziehungsweise eine Datenübertragung 20 Buchstaben. Diese Buchstaben definieren den Start des Audiosignals, die zu übertragenden Daten sowie eine Fehlerkorrektur. Selbstverständlich können auch andere Kodierungen des Audiosignals angewendet werden. Die Lautstärke des Audiosignals nimmt mit dem Pulsweitenmodulationstastgrad zu. Bevorzugt ist, dass, wie bereits erwähnt, der Tastgrad derart niedrig ist, dass der Elektromotor 16 nicht in eine Drehbewegung versetzt wird. Der Tastgrad wird dabei bevorzugt in Abhängigkeit von der Trägheit der anzutreibenden mechanischen Komponenten der Elektrowerkzeugmaschine 2 bestimmt. Bei dem vorliegenden Ausführungsbeispiel mit einem Handschrauber ist beispielsweise ein Tastgrad von 13% vorteilhaft.

Das in Figur 3 gezeigte Audiosignal kann in Bezug auf seine Qualität vorteilhafterweise durch Erhöhen des Tastgrads und durch Erzeugen eines Sinussignals optimiert werden. Die Induktivität des Elektromotors 16 kann dabei als Tiefpassfilter zum Glätten von Steilflanken verwendet werden.

Wie in Figur 3 ersichtlich, weist das Audiosignal für unterschiedliche Frequenzen unterschiedliche Amplituden auf. Dies beruht auf der nicht-Linearität des Elektromotors 16 und der Resonanz des Gehäuses der Elektrowerkzeugmaschine 2. Dies kann dadurch verbessert werden, dass der Tastgrad individuell für jede Frequenz angepasst wird.

Die Kommunikationseinrichtung 8 kann sowohl bei batteriebetriebenen als auch bei kabelgebundenen Elektrowerkzeugmaschinen eingesetzt beziehungsweise verwendet werden. In dem Fall, in welchem der Elektroaktuator 3 jederzeit an- und ausgeschaltet werden kann, stellt die Frequenzmodulation eine gute Wahl für die Datenübertragung dar. Durch eine einfache Anpassung von Software ist die Sendeeinrichtung 9 in nahezu jeder insbesondere batteriebetrieben Elektrowerkzeugmaschine 2 einsetzbar. Die Kommunikationseinrichtung 8 kann beispielsweise dazu eingesetzt werden, am Bandende bei der Fertigung das hergestellte Produkt zu testen. Weiterhin ist es möglich, durch die Kommunikationseinrichtung eine Produktidentifikation durchzuführen, beispielsweise den Produktnamen, einer Software- und/oder Hardwareversion abzufragen. Darüber hinaus können Benutzer die installierte Applikation dazu nutzen, weitere Informationen über die Elektrowerkzeugmaschine 2, die beispielsweise ein Ausstellungstück in einem Laden ist, zu erfahren. Weiterhin können durch die Kommunikationseinrichtung 8 auf einfache Art und Weise Fehler der Elektrowerkzeugmaschine 2 ausgelesen und beispielsweise an ein Servicecenter weitergeleitet werden. Außerdem können laufend Daten über den Betrieb der Elektrowerkzeugmaschine 2 erfasst und zur Marktanalyse verwendet werden. Die Daten werden dazu beispielsweise direkt von dem Mobiltelefon an einen Zentralserver gesendet, wo die Daten gesammelt und ausgewertet werden können. Durch die Kommunikationseinrichtung 8 können außerdem Warnsignale erzeugt werden, wenn beispielsweise die Elektrowerkzeugmaschine 2 eine kritische Temperatur erreicht oder droht eine kritische Temperatur zu erreichen, wobei dann der Betrieb der Elektrowerkzeugmaschine 2 bevorzugt automatisch eingestellt wird. Die Sendeeinrichtung 9 kann unterschiedliche Ereignisse durch unterschiedliche akustische Signale mitteilen.

Auch kann das Audiosignal zur Bedienung einer interaktiven Bedienungsanleitung verwendet werden, sodass beispielsweise im Fehlerfall das Elektrowerkzeug durch ein entsprechendes akustisches Signal den Benutzer zu einer bestimmten Seite in der Bedienungsanleitung führt, die für den aktuellen Fehlerfall für Relevanz ist. Auch kann die Elektrowerkzeugmaschine 2 durch die Kommunikationseinrichtung 8 identifiziert und mithilfe des Mobiltelefons lokalisiert werden. Grundsätzlich kann die Sendeeinrichtung gemessene oder berechnete Daten senden, die dazu verwendet werden können, weitere Werte zu berechnen oder abzuschätzen, wie beispielsweise eine geschätzte verbleibende Betriebszeit, die Anzahl eingeschraubter oder noch einzuschraubender Schrauben, den Ladezustand, Spannung, Temperatur, den Allgemeinzustand einer Batterie und/oder eine geschätzte Wartezeit nach einem Fehlerfall, insbesondere einer Belastung.

Durch die Kommunikationseinrichtung 8 kann die Elektrowerkzeugmaschine 2 dem Benutzer Informationen übermitteln, wobei die Bandbreite der Informationsübermittlung vorteilhafterweise zwischen 0,3 kHz und 3 kHz liegt. Durch die Kommunikationseinrichtung 8 ist es außerdem möglich, dass die Elektrowerkzeugmaschine 2 ein Accessoire, wie beispielsweise eine Zusatzeinheit, die an der Elektrowerkzeugmaschine 2 angebracht werden kann, drahtlos durch das akustische Signal ansteuert. Der Kopfhöreranschluss des Mobiltelefons kann beispielsweise auch mit einem Ladeanschluss der Elektrowerkzeugmaschine 2 verbunden werden, gegebenenfalls unter Zwischenschaltung eines Adapters. Die Steuereinheit, die insbesondere ein Mikrokontroller aufweist, kann als Digitalverstärker verwendet werden. Der Elektromotor kann als Vibrations-Lautsprecher direkt verwendet werden, wie zuvor beschrieben. Alternativ könnte der Motor jedoch auch mit einer Lautsprechereinrichtung verbunden werden, um beispielsweise das akustische Signal zu verstärken.

## Patentansprüche

1. Kommunikationseinrichtung (8) für eine Elektrowerkzeugmaschine (2), insbesondere Handwerkzeugmaschine, die wenigstens einen Elektroaktuator (3) und eine Steuereinheit (4) zum Ansteuern des Elektroaktuators (3) aufweist, mit einer der Elektrowerkzeugmaschine (2) zugeordneten Sendeeinrichtung (9) zum Senden von Daten und mit einer einer mobilen oder stationären Einrichtung (6) zugeordneten Empfangseinrichtung (10) zum Empfangen der Daten, wobei die Empfangseinrichtung (10) wenigstens ein Mikrofon (11) aufweist, und die Steuereinheit (4) zusammen mit dem Elektroaktuator (3) die Sendeeinrichtung (9) bildet, **dadurch gekennzeichnet, dass** die Steuereinheit (4) zum Senden von Daten den Elektroaktuator (3) zur Erzeugung von einem durch das Mikrofon (11) zu erfassenden akustischen Signal derart aktuierungsfrei ansteuert, dass der Elektroaktuator (3) die ihm zugeordnete Funktion nicht durchführt und stattdessen lediglich das akustische Signal erzeugt.

2. Kommunikationseinrichtung (8) nach Anspruch 1, **dadurch gekennzeichnet, dass** die Steuereinheit (4) eine Leistungselektronik (15) mit wenigstens einem elektrisch betätigbaren Schaltelement, insbesondere Leistungshalbleiterschalter, aufweist.

3. Kommunikationseinrichtung (8) nach einem der vorhergehenden Ansprüche, **dadurch gekennzeichnet, dass** der Elektroaktuator (3) als Elektromotor ausgebildet ist.

4. Kommunikationseinrichtung (8) nach Anspruch 3, **dadurch gekennzeichnet, dass** die Steuereinheit (4) den Elektromotor zum Erzeugen des akustischen Signals drehmomentfrei und/oder rotationsfrei ansteuert.

5. Kommunikationseinrichtung (8) nach einem der vorhergehenden Ansprüche, **dadurch gekennzeichnet, dass** die Steuereinheit (4) den Elektroaktuator (3) pulsweitenmoduliert ansteuert.

6. Elektrowerkzeugsystem (1) mit einer Elektrowerkzeugmaschine (2), insbesondere Handwerkzeugmaschine, die wenigstens einen Elektroaktuator (3) und eine den Elektroaktuator (3) ansteuernde Steuereinheit (4) aufweist, mit einer mobilen oder stationären Einrichtung (6) und mit einer Kommunikationseinrichtung (8) nach einem der Ansprüche 1 bis 5.

7. Elektrowerkzeugsystem (1) nach Anspruch 7, **dadurch gekennzeichnet, dass** die Einrichtung (6) als Mobilcomputer oder Mobiltelefon ausgebildet ist.

## Claims

1. Communication device (8) for an electric power tool (2), in particular a hand-held power tool, which has at least one electric actuator (3) and a control unit (4) for controlling the electric actuator (3), comprising a transmission device (9), assigned to the electric power tool (2), for transmitting data, and comprising a receiving device (10), assigned to a mobile or stationary device (6), for receiving the data, wherein the receiving device (10) has at least one microphone (11), and the control unit (4), together with the electric actuator (3), forms the transmission device (9), **characterized in that,** for the purpose of transmitting data, the control unit (4) controls the electric actuator (3) to generate an acoustic signal to be picked up by the microphone (11) without actuation such that the electric actuator (3) does not carry out the function assigned to it and instead generates only the acoustic signal.

2. Communication device (8) according to Claim 1, **characterized in that** the control unit (4) has power electronics (15) having at least one switching element, in particular a power semiconductor switch, that can be actuated electrically.

3. Communication device (8) according to either one of the preceding claims, **characterized in that** the electric actuator (3) is in the form of an electric motor.

4. Communication device (8) according to Claim 3, **characterized in that** the control unit (4) controls the electric motor to generate the acoustic signal without torque and/or without rotation.

5. Communication device (8) according to any one of the preceding claims, **characterized in that** the control unit (4) controls the electric actuator (3) in a pulse-width-modulated manner.

6. Electric tool system (1) comprising an electric power tool (2), in particular a hand-held power tool, which has at least one electric actuator (3) and a control unit (4) that controls the electric actuator (3), comprising a mobile or stationary device (6), and comprising a communication device (8) according to any one of Claims 1 to 5.

7. Electric tool system (1) according to Claim 7, **characterized in that** the device (6) is in the form of a mobile computer or a mobile telephone.

## Revendications

1. Dispositif de communication (8) pour une machine-outil électrique (2), en particulier une machine-outil portative présentant au moins un actionneur électrique (3) et une unité de commande (4) pour piloter l'actionneur électrique (3), comprenant un dispositif de transmission (9), associé à la machine-outil électrique (2), pour transmettre des données et un dispositif de réception (10), associé à un dispositif mobile ou stationnaire (6), pour recevoir des données, le dispositif de réception (10) présentant au moins un microphone (11), et l'unité de commande (4) formant, conjointement avec l'actionneur électrique (3), le dispositif de transmission (9), **caractérisé en ce que** l'unité de commande (4), pour transmettre des données, pilote l'actionneur électrique (3) sans actionnement pour générer un signal acoustique à détecter par le microphone (11) de telle sorte que l'actionneur électrique (3) n'effectue pas la fonction qui lui est associée et génère seulement un signal acoustique à la place.

2. Dispositif de communication (8) selon la revendication 1, **caractérisé en ce que** l'unité de commande (4) présente une électronique de puissance (15) dotée d'au moins un élément de commutation pouvant être actionné électriquement, en particulier un commutateur à semi-conducteur de puissance.

3. Dispositif de communication (8) selon l'une quelconque des revendications précédentes, **caractérisé en ce que** l'actionneur électrique (3) est réalisé sous forme de moteur électrique.

4. Dispositif de communication (8) selon la revendication 3, **caractérisé en ce que** l'unité de commande (4) pilote le moteur électrique sans couple et/ou sans rotation pour générer le signal acoustique.

5. Dispositif de communication (8) selon l'une quelconque des revendications précédentes, **caractérisé en ce que** l'unité de commande (4) pilote l'actionneur électrique (3) par modulation en largeur d'impulsion.

6. Système d'outillage électrique (1), comprenant une machine-outil électrique (2), en particulier une machine-outil portative, présentant au moins un actionneur électrique (3) et une unité de commande (4) pilotant l'actionneur électrique (3), comprenant un dispositif mobile ou stationnaire (6) et un dispositif de communication (8) selon l'une quelconque des revendications 1 à 5.

7. Système d'outillage électrique (1) selon la revendication 7, **caractérisé en ce que** le dispositif (6) est réalisé sous la forme d'un ordinateur mobile ou d'un téléphone mobile.
